(19) Europäisches Patentamt / European Patent Office / Office européen des brevets

(11) **EP 4 007 137 B1**

(12) **EUROPEAN PATENT SPECIFICATION**

(45) Date of publication and mention
of the grant of the patent:
**30.08.2023 Bulletin 2023/35**

(21) Application number: **20210294.3**

(22) Date of filing: **27.11.2020**

(51) International Patent Classification (IPC):
**H02K 49/10** (2006.01)     *F16H 49/00* (2006.01)
*H02K 7/116* (2006.01)

(52) Cooperative Patent Classification (CPC):
**H02K 49/102;** F16H 49/005; H02K 7/116

(54) **HYBRID GEAR TRAIN WITH MAGNETIC COUPLING**

HYBRID-GETRIEBEZUG MIT MAGNETKUPPLUNG

TRAIN D'ENGRENAGES HYBRIDE AVEC ACCOUPLEMENT MAGNÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.06.2022 Bulletin 2022/22**

(73) Proprietor: **Julius-Maximilians-Universität
Würzburg
97070 Würzburg (DE)**

(72) Inventor: **Vogel, Patrick
97218 Gerbrunn (DE)**

(74) Representative: **Lucke, Andreas
Boehmert & Boehmert
Anwaltspartnerschaft mbB
Pettenkoferstrasse 22
80336 München (DE)**

(56) References cited:
EP-A1- 1 069 671      WO-A1-2016/184513
WO-A2-2008/085931      CN-A- 106 856 366
CN-A- 108 071 769      DE-A1- 19 647 469
DE-A1-102008 035 274   US-A- 5 013 949
US-A- 5 739 627      US-A1- 2010 176 674

**Description**

FIELD OF THE INVENTION

The present invention is in the field of gear trains. More precisely, the present invention relates to a hybrid transmission system for transmitting torque via a combination of cyclically varying magnetic fields and mechanically engaging gears.

BACKGROUND

A wide variety of applications require the transmission of mechanical motion between different movable systems with rotating components. Preferably, the transmission enables a conversion of mechanical energy, e.g. by converting a high torque in a first system towards high rotational speeds of a second system and vice versa.

A gear train comprises a plurality of gears to transmit a torque/rotational speed of one gear to another gear at a certain conversion ratio. The gears in the gear train typically comprise protruding teeth to mechanically engage in an interlocking fashion, wherein the number of teeth can control a conversion ratio between torque and rotational speed of the gears in the gear train.

In order to reduce mechanical friction, US 2010/0176674 A1 proposes replacing the mechanical teeth of the prior art with cyclically varying magnetic fields along the outer perimeters of rotatably mounted discs. The cyclically varying fields of each disc are created by arranging permanent magnets in a Halbach configuration around the perimeter of the discs, to generate magnetic fields on the outside of the discs. The resulting "magnetic gears" can induce cyclically varying forces on each other to transmit a rotation similar to a mechanical engagement of conventional gears.

SUMMARY OF THE INVENTION

However, the known gear trains based on magnetic forces are often imprecise or conceptually rely on Halbach arrays within each gear of the gear train, which can be difficult to fabricate in practice.

In view of this state-of-the-art, the object underlying the invention is to provide an improved gear train with a simple construction and improved stability.

This object is solved by a hybrid transmission system according to claim 1. The dependent claims relate to preferred embodiments.

According to a first aspect, the invention relates to a hybrid transmission system comprising a central rotor, a plurality of pinions arranged around the central rotor, and an annular gear. The central rotor comprises a permanent rotor magnet which is rotationally fixed with respect to the central rotor. The annular gear mechanically engages the plurality of pinions, such that rotating the annular gear drives a concurrent rotation of the plurality of pinions, and each of the plurality of pinions comprises a respective permanent pinion magnet, wherein the permanent pinion magnet is mounted to the respective pinion in a rotationally fixed manner, such that driving a concurrent rotation of the plurality of pinions induces cyclically varying magnetic forces on the central rotor to magnetically drive a rotation of the central rotor.

Accordingly, the hybrid transmission system may transmit a rotary motion of the pinions to the central rotor via the pinion magnets which can magnetically drive a rotary motion of the central rotor. Since the transmission of motion between the pinions and the central rotor is based on magnetic forces, the central rotor can be mechanically isolated from the pinions and/or the annular gear. The annular gear and the pinions are mechanically coupled, such that the rotation of the central rotor can be driven by a relative motion of the plurality of pinions and the annular gear.

In preferred embodiments, the central rotor comprises a central shaft rotating around a shaft axis, wherein the central shaft is arranged concentrically with respect to the plurality of pinions and the annular gear.

Hence, the cyclically varying magnetic forces may be transmitted onto the central shaft rotatably mounted in the center of the transmission system. In some embodiments, the central shaft mounts the permanent rotor magnet and substantially forms the central rotor in the transmission system.

The pinions may be external (spur) gears with a substantially cylindrical pitch surface and radially protruding teeth to engage with external or internal teeth of the annular gear. Preferably, the annular gear surrounds the pinions as an internal gear to engage with each of the plurality of pinions at a radially outward position with respect to the central rotor.

In preferred embodiments, the annular gear is arranged radially outwards from the plurality of pinions with respect to the central rotor and comprises teeth protruding radially inwards from an inner perimeter of the annular gear to engage with corresponding teeth of each of the plurality of pinions.

By adjusting the number of teeth of the annular gear and the pinions, the hybrid transmission system may transfer forces at a predetermined conversion ratio with a compact system. In addition, the annular gear may also provide structural support to the pinions mounting the permanent pinion magnets, by radially constraining the plurality of pinions to the inner diameter of the annular gear.

In preferred embodiments, the pinions of the plurality of pinions are mounted to a carrier, wherein the annular gear and the carrier are rotatable with respect to each other to rotate each of the plurality of pinions and to drive a motion of the central rotor.

The hybrid transmission system may transfer forces similarly to a planetary gear train, wherein the carrier and the annular gear perform a relative rotational motion with respect to each other, while the rotation of the individual pinions engaging the annular gear may magnetically drive a rotation of the central rotor. Hence, the central rotor may be driven either by rotating one of the carrier and the annular gear and fixing the other.

In some embodiments, the annular gear and/or the carrier may be selectively switched between a first fixed configuration in which the carrier and the annular gear perform a relative rotational motion with respect to each other when the carrier or the annular gear are subjected to a torque, e.g. by fixing the angular position of the annular gear, and a second rotating configuration in which the annular gear is free to rotate and/or rotationally fixed to the carrier or vice versa, such that the annular gear and the carrier perform a joint rotational movement, when the carrier and/or the annular gear are subjected to a torque. In the second rotating configuration, the motion of the central rotor in response to the rotation of the carrier/annular gear may be independent from a gear ratio between the annular gear and the pinions, such that switching between the second rotating configuration and the first fixed configuration may enable switching between different speed ratios. Further, the central rotor may rotate in inverse directions in the first and second configuration, when a given torque is applied to the carrier and/or the annular gear.

In preferred embodiments, the annular gear comprises outer teeth at an outer circumference of the annular gear to receive an external torque.

A torque may then be transferred onto the annular gear and transmitted to the central rotor by coupling a gear to said outer teeth on the outer circumference of the annular gear.

In preferred embodiments, the pinions of the plurality of pinions are arranged in a casing, wherein the casing surrounds the central rotor and mechanically isolates the central rotor and the plurality of pinions.

For example, the central rotor may be housed in a cylindrical casing configured to constrict a radial motion of the central rotor and mechanically isolating the central rotor from the plurality of pinions. The casing may be fluid-tight such as to enable use of the central rotor and the pinions in distinct fluidic systems, such as for lubricating the pinions and the annular gear while immersing the central rotor in a liquid at the same time, e.g. for a jet drive application.

In preferred embodiments, the central rotor is not coupled in a mechanically force-locking manner to the plurality of pinions.

In other words, the pinions may transfer a torque onto the central rotor without mechanically coupling to the central rotor. The skilled person will appreciate that the pinions and the central rotor may be integrated in a common mechanical assembly, such as to restrain an axial/radial motion of the central rotor. Accordingly, the expression "not coupled in a mechanically force-locking manner "designates a configuration, in which the rotation of the central rotor is not driven via a mechanical coupling between the pinions and the central rotor (such as via engaging/meshing outer teeth of the pinions and the central rotor), but in which any torque is transferred through a magnetic coupling between the pinion magnets and the rotor magnet instead.

In preferred embodiments, a magnetic orientation of each of the permanent pinion magnets lies in a plane perpendicular to the axis of rotation of the central rotor.

The pinions and the central rotor may rotate in a common plane of rotation and all of the magnetic moments of the permanent pinion magnets may lie in this common plane of rotation. Hence, the hybrid transmission system may be simplified, while a centering force along the axis of rotation may be applied to the central rotor, which may automatically center the central rotor in the hybrid transmission system.

In preferred embodiments, each pinion of the plurality of pinions is mounted via two non-magnetic bearings arranged on axially opposite faces of each pinion to a carrier.

The bearings may axially constrain the pinions and prevent the pinions from rotating outside of the plane of rotation of the central rotor. In addition, the non-magnetic bearings may counteract repulsive magnetic forces between the pinions, such as to hold the pinions in a common plane of rotation against a magnetic torsional moment of the permanent pinion magnets onto each other.

In preferred embodiments, teeth of neighboring pinions of the plurality of pinions are slanted and/or offset with respect to each other in an axial direction, and are sufficiently close such that axial projections of teeth of neighboring pinions overlap without engaging with each other.

In other words, the teeth of neighboring pinions may partially overlap when viewed along the axis of rotation of the central rotor to allow the pinions to be arranged in close proximity, such as to allow a more compact assembly of the hybrid transmission system and/or to increase a magnetic flux acting on the central rotor.

Preferably, each pinion is made of a non-magnetic material and houses the corresponding permanent pinion magnet (e.g. a bipolar permanent magnet), such as to prevent torsional magnetic forces arising from the axial overlap of the teeth of neighboring pinions. For example, the pinions may be constructed of (non-magnetic) stainless steel, plastic or a ceramic material.

In preferred embodiments, the pinions of the plurality of pinions comprise an equal number of teeth.

When the pinions of the plurality of pinions comprise an equal number of teeth, the pinions may rotate at the same angular velocity as a result of a relative rotation between the annular gear and the pinions, such that the magnetic orientation of all pinions may rotate synchronously.

In preferred embodiments, the permanent pinion magnets of the plurality of pinions are bipolar magnets, which are preferably mounted concentrically with respect to the corresponding pinion.

Bipolar magnets are simple to fabricate and may be mounted within the gears. For example, each pinion may feature a recess in a center of the pinion to receive a bipolar magnet, e.g. a NdFeB based permanent magnet. The magnet may be mounted radially inwards from the teeth of the pinion and create a magnetic dipole associated with each pinion.

In preferred embodiments, the magnetic orientations of the permanent pinion magnets of the plurality of pinions are arranged in a fixed relative angular relationship, wherein the magnetic orientations of each pair of neighboring permanent pinion magnets preferably differ by a same angular shift.

The permanent pinion magnets may be oriented in the hybrid transmission system such that the magnetic torques acting on each one of the permanent pinion magnets due to the magnetic force of the respective remainder of the permanent pinion magnets may at least partially compensate each other, e.g. the total or collective magnetic torque of the permanent pinion magnets due to their mutual interaction may be zero. Further, the arrangement of the relative angular arrangement may be selected to constitute a Halbach ring array configuration to substantially constrain a jointly generated magnetic field to the inside of the circular arrangement of the plurality of pinions.

The fixed relative angular relationship of the magnetic orientations of the permanent pinion magnets should be constant between neighboring pinions while the pinions are rotated. For example, a relative angular relationship may be pre-determined during construction of the hybrid transmission system and may be fixed by the engagement of each pinion with the annular gear. The pinions may each have the same teeth number, such that a relative angular relationship is preserved when the pinions are concurrently rotated with respect to the annular gear.

In preferred embodiments, the magnetic orientations of the permanent pinion magnets of neighboring pinions differ by an angle of $\Delta\varphi=(k+1)^*360°/N,$ with N being the total number of pinions magnetically driving the central rotor and k being a positive integer.

In other words, the magnetic orientations of each of the pinion magnets may differ by an angle of $\Delta\varphi=(k+1)^*360°/N$ from the magnetic orientations of their respective neighboring pinion magnets, wherein each pinion may have two neighbors with opposite relative angular shifts on either side.

The permanent pinion magnets with the shifted magnetic orientation according to the above equation may constitute a Halbach ring array, which may substantially cancel magnetic stray fields outside of a circular arrangement of the pinions and may produce a magnetic field distribution with $2k$ magnetic poles on the inside of the circular arrangement of the pinions.

By concurrently rotating the pinions around their individual axes of rotation, the magnetic field distribution on the inside of the circular arrangement of the pinions may be rotated accordingly, and in particular inversely with respect to the direction of rotation of the pinions, but with the same angular velocity.

The inventor found that for k>o, the magnetic torques generated by the permanent pinion magnets onto each other may compensate each other, such that the hybrid transmission system may not be biased to a specific rotational configuration due to internal magnetic forces.

In preferred embodiments, the permanent rotor magnet comprises $2k$ magnetic poles.

The magnetic arrangement of the poles of the permanent rotor magnet may then correspond to the poles of the magnetic field distribution arising due to the magnetic forces from the pinions. The $2k$ magnetic poles of the permanent rotor magnet may align with the $2k$ magnetic poles of the magnetic field distribution on the inside of the circular arrangement of the pinions and may promote an optimal force transfer between the pinions and the central rotor.

In preferred embodiments, $k=1$ and the permanent rotor magnet is a bipolar magnet.

A bipolar magnet may be simple to implement in the central rotor and may maximize a transmitted torque between the central rotor and the pinions.

In preferred embodiments, the plurality of pinions comprises more than 4 pinions, in particular at least 8 or at least 12 pinions.

With a larger number of gears, the magnetic torque onto individual pinions by the other (neighboring) pinions may be smaller, such that the resulting hybrid transmission system may have greater mechanical stability, and the stray field outside the arrangement of permanent pinion magnets may be reduced.

DETAILED DESCRIPTION OF EMBODIMENTS

The features and numerous advantages of the hybrid transmission system according to the present invention will best be understood from a detailed description of preferred embodiments with reference to the accompanying drawings, in which:

Fig. 1            schematically illustrates a hybrid transmission system according to an example;

Fig. 2A-2C        schematically illustrate different Halbach ring configurations with twelve permanent magnets held in a fixed relative angular orientation according to an example;

Fig. 2D, 2E       schematically illustrate the torque transmission in a k=1 Halbach ring configuration onto a permanent magnet in a center of the Halbach ring magnet arrangement according to different examples;

Fig. 3A, 3B       schematically illustrate the torque on each of the permanent pinion magnets arising from their magnetic interactions according to an exemplary simulated permanent magnet configuration for $k$=0 and $k$=1, respectively;

Fig. 3C, 3D       illustrate the simulated magnetic field distribution inside of a circular arrangement of permanent pinion magnets for the case of k=1 in the x-y plane and in the y-z plane;

Fig. 4            schematically illustrates a hybrid transmission system according to another example;

Fig. 5A-5D        illustrates an example of a pinion composed of two portions with different maximum radial extensions;

Fig. 6A, 6B       show schematic perspective and top views of a carrier portion for mounting a plurality of pinions according to an example;

Fig. 7A, 7B       show perspective and top views of a circular annular gear according to an example; and

Fig. 8            shows a perspective sectional view of a hybrid transmission system according to another example.

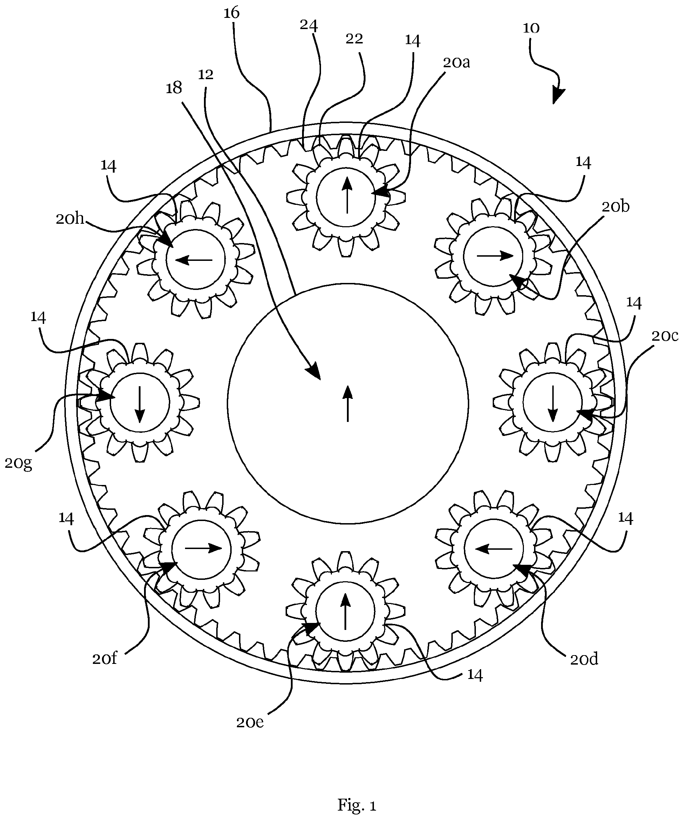

Fig. 1 schematically illustrates a hybrid transmission system 10 according to an example. The hybrid transmission system 10 comprises a central rotor 12, a plurality of eight pinions 14, and an annular gear 16. The central rotor 12 comprises a bipolar permanent rotor magnet 18 (magnetic orientation or magnetic moment indicated by straight black arrow) rotationally fixed to the central rotor 12, and is surrounded by the plurality of pinions 14 in the plane of projection, in the following also referred to as x-y plane. The plurality of pinions 14 is distributed at regular angles around the central rotor 12 in the plane of projection and each pinion 14 comprises a bipolar permanent pinion magnet 20a-h (magnetic orientation indicated by straight black arrow) arranged concentrically in each pinion 14 and rotationally fixed to the respective pinion 14. The pinions 14 are configured to rotate in the plane of projection and each comprises external teeth 22 to engage with internal teeth 24 of the annular gear 16.

The annular gear 16 surrounds the plurality of pinions 14 in the plane of projection and the internal teeth 24 of the annular gear 16 protrude radially inwards to engage with the external teeth 22 of each of the pinions 14. The pinions 14 each have the same number of external teeth 22, such that a rotation of the annular gear 16 with respect to the pinions 14 induces a synchronous rotation of all pinions 14 in the plane of projection.

The permanent pinion magnets 20a-h of the plurality of pinions 14 are arranged such that the magnetic moments lie in the plane of projection/rotation. The magnetic moments of the permanent pinion magnets 20a-h can be held in a fixed relative arrangement or relationship by the engagement of the pinions 14 with the annular gear 16. In other words, the engagement between the internal teeth 24 of the annular gear 16 and the external teeth 22 of the pinions 14 may maintain a pre-determined relative angular relationship of the plurality of pinions 14, such as to maintain a fixed relative angular relationship of the permanent pinion magnets 20a-h.

In Fig. 1, the magnetic orientation of the permanent pinion magnet 20a of a given pinion 14 differs by an angle of 90° from the magnetic orientation of the permanent pinion magnets 20h, 20b of the neighboring pinions 14, i.e. differs by 90° counter-clockwise and clockwise to the respective counter-clockwise and clockwise neighbor along the perimeter of the annular gear 16. Accordingly, the permanent pinion magnets 20a-h may generate a joint magnetic field constrained substantially to the space surrounded by the pinions 14 to magnetically couple with the permanent rotor magnet 18 of the central rotor 12.

By synchronously rotating the pinions 14, e.g. by driving a rotation of the annular gear 16, the individual permanent pinion magnets 20a-h of the pinions 14 may be synchronously rotated in order to induce a rotation of the magnetic field generated inside the space surrounded by the pinions 14. Said rotation of the generated magnetic field may generate a (magnetic) torque on the permanent rotor magnet 18, such that the central rotor 12 may be rotated through the magnetic coupling between the permanent pinion magnets 20a-h of the synchronously rotating pinions 14 and the permanent rotor magnet 18.

Accordingly, a compact hybrid transmission system 10 may be provided which allows transmission of forces at a pre-determined speed ratio determined by the ratio of external teeth 22 and internal teeth 24. In principle, a plurality of different magnetic configurations may be employed to enable the magnetic coupling between the central rotor 12 and the pinions 14. For example, in what might be regarded as the most obvious arrangement, the magnetic orientations of the plurality of bipolar permanent pinion magnets 20a-h may point in the same direction, or in other words, the respective magnetic moments may be parallel to each other.

However, in preferred embodiments, the relative magnetic orientation of the permanent pinion magnets 20a-h constitutes a Halbach ring array for generating a magnetic field distribution substantially constrained to the space surrounded by the pinions 14, e.g. with a negligible stray field outside of the annular gear 16.

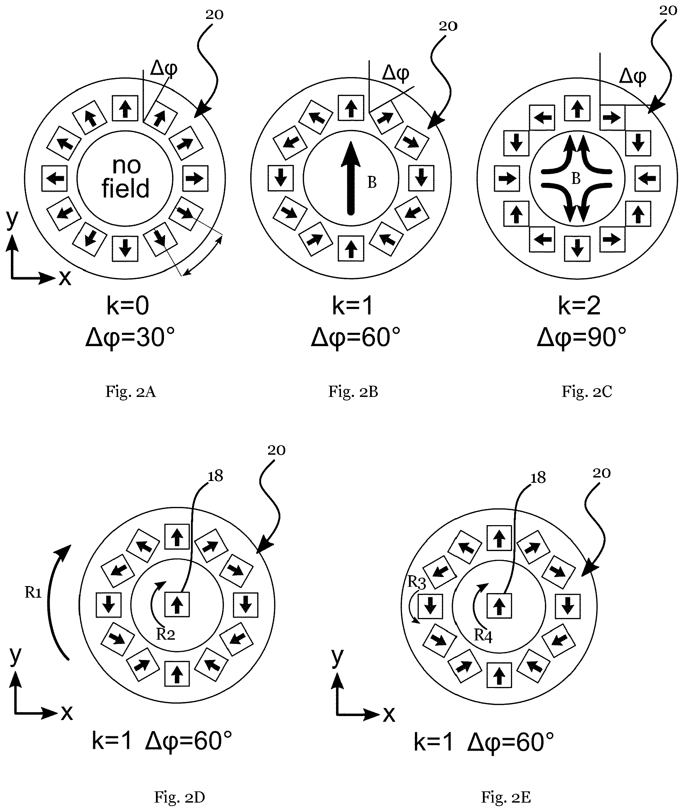

Figs. 2A-C schematically illustrate different Halbach ring configurations with N=12 (twelve) permanent pinions magnets 20 held in a fixed relative angular relationship according to an example. The different Halbach ring configurations in Figs. 2A-C are characterized by different angular shifts $\Delta\varphi$ as well as by the index $k$. Generally, a Halbach ring array may be obtained by arranging N bipolar permanent magnets 20 in a circle, wherein the permanent magnets 20 are arranged at regular angles and feature a relative angular shift of their magnetic orientation with respect to their respective neighbors of

$$\Delta\varphi = (k + 1) * 360°/N. \tag{1}$$

Fig. 2A illustrates the case of $k$=0, in which the magnetic orientations of neighboring permanent pinions magnets 20 are shifted by $\Delta\varphi$ = 360°/$N$ = 30°, and all of the permanent pinions magnets 20 are oriented such that their magnetic moments point away from the center of the circle along the radial direction. The resulting magnetic field in the center of the circle is substantially zero.

Fig. 2B illustrates the case of $k$=1, in which the magnetic orientations of neighboring permanent pinions magnets 20 are shifted by $\Delta\varphi$ = 720°/N = 60°. The resulting magnetic field distribution generated by the permanent pinion magnets 20 comprises a substantially homogenous magnetic field B inside the space surrounded by the permanent pinion magnets 20, while a magnetic stray field outside of the circular arrangement of the permanent pinions magnets 20 is substantially zero.

Fig. 2C illustrates the case of $k$=2, in which the magnetic orientations of neighboring permanent pinions magnets 20 are shifted by $\Delta\varphi$ = 1080°/N = 90°. The resulting magnetic field distribution generated by the permanent pinion magnets 20 comprises a quadrupole magnetic field B inside the space surrounded by the permanent pinion magnets 20, while a magnetic stray field outside of the circular arrangement of permanent pinions magnets 20 is substantially zero.

By increasing $k$, magnetic field distributions substantially constrained to the inside of the space surrounded by the permanent pinion magnets 20 and comprising a magnetic field with 2$k$ magnetic poles may be generated. The magnetic field may couple to a permanent rotor magnet 18 arranged concentrically in the center of the permanent pinion magnets 20, wherein the permanent rotor magnet 18 is preferably configured to mirror the configuration of the magnetic field generated by the permanent pinion magnets 20, e.g. corresponds to a permanent magnet with 2$k$ magnetic poles, such as a bipolar permanent rotor magnet 18 for the case of $k$=1.

Figs. 2D, 2E illustrate the effect of rotating the permanent pinion magnets 20 jointly around their common center and around their individual axes of rotation, respectively.

When all the permanent pinion magnets 20 are jointly rotated around their common center according to the arrow R1 as illustrated in Fig. 2D, but without rotation around their individual axes, the magnetic field inside of the permanent pinion magnets 20 is rotated along with the permanent pinion magnets 20 with the same angular frequency and (clockwise) direction. Accordingly, a permanent rotor magnet 18 arranged concentrically in the center of the permanent pinion magnets 20 is rotated together with the permanent pinion magnets 20 as illustrated by the arrow R2.

However, when the permanent pinion magnets 20 are rotated (counter-clockwise) around their individual axes of rotation (as illustrated for one of the permanent pinion magnets 20 by arrow R3), the magnetic field in the center of the permanent pinion magnets 20 is rotated in the inverse (clockwise) direction. Accordingly, a permanent rotor magnet 18 arranged concentrically in the center of the permanent pinion magnets 20 is rotated inversely with respect to the permanent pinion magnets 20 as illustrated by the arrow R4.

Hence, different rotation directions may be selected by either driving a rotation of the individual permanent pinion magnets 20 or by rotating the entire arrangement of permanent pinion magnets 20 around the common center with the same torque.

The inventor also realized that for the cases of $k$>0 (in the following explained in detail for the example of $k$=1) an advantageous configuration may be provided for constructing a hybrid transmission system 10.

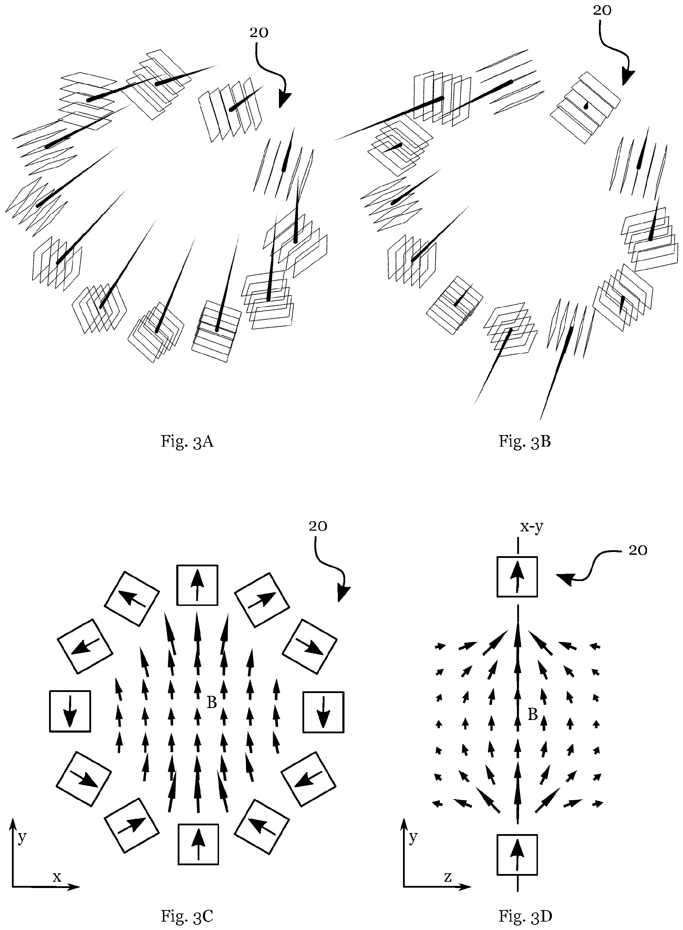

Figs. 3A and 3B schematically illustrate the torque on each of the permanent pinion magnets 20 arising from their magnetic interactions according to an exemplary simulated permanent magnet configuration for $k=0$ and $k=1$, respectively.

The simulated example comprises $N=12$ permanent pinion magnets 20, wherein each permanent pinion magnet 20 is illustrated by 4 rectangular coils arranged perpendicularly to the magnetic orientation of the permanent pinion magnets 20. The (magnetic) torque on each of the permanent pinion magnets 20 is illustrated by triangular shaped black arrows originating from the respective permanent pinion magnet 20, wherein the direction of the arrow illustrates the direction of the torque vector, while a length of the arrow illustrated a magnitude of the torque in the simulated example.

In Fig. 3A, the case for $k=0$ is shown, in which the magnetic orientations of neighboring permanent pinion magnets 20 are shifted by 30°. As can be seen from the simulated torque, the magnetic torques acting on the individual ones of the permanent pinion magnets 20 are oriented substantially along the same direction and result in a net torque acting on the plurality of permanent pinion magnets 20 that is directed outside of the plane of rotation. Accordingly, the permanent pinion magnets 20 will be biased towards a pre-determined angular configuration when mounted on synchronously rotating pinions 14 as in the example of Fig. 1, and the internal magnetic forces may obstruct rotation of the pinions 14 out of the pre-determined configuration.

However, for the case of $k=1$ shown in Fig. 3B, in which the magnetic orientations of neighboring permanent pinion magnets 20 are shifted by 60°, the torques acting on the different permanent pinion magnets 20 point in different directions. In the example of Fig. 3B, four permanent pinion magnets 20 are subjected to a positive torque perpendicular to the plane of rotation, four permanent pinion magnets 20 are subjected to a negative torque of substantially equal magnitude but opposite sign, and four permanent pinion magnets 20 are not subjected to any significant torque at all. Accordingly, the net torque acting on the permanent pinion magnets 20 as a whole may be zero, such that the pinions 14 of a transmission system 10 may not be biased with respect to the annular gear 16 towards a specific angular configuration.

In fact, the inventor found that for $k>0$, the torques on the individual permanent pinion magnets 20 due to internal magnetic forces may add up to substantially zero net torque for all angular configurations, such that the permanent pinion magnets 20 are not biased towards a specific angular configuration when mounted on synchronously rotating pinions 14 as in the example of Fig. 1.

Accordingly, a hybrid transmission system 10 may transmit a relative motion of the annular gear 16 and the pinions 14 while the internal magnetic forces balance each other, such as to enable a continuous rotation of the pinions 14.

As can be further seen in Fig. 3B, groups of permanent pinion magnets 20 in different angular sectors may nonetheless be subjected to non-zero torques of opposite sign. In a hybrid transmission system 10 as illustrated in Fig. 1, the opposite torques may bring the associated pinions 14 into engagement with opposite flanks of the internal teeth 24 of the annular gear 16, such that the different pinions 14 oppose relative movement between the annular gear 16 and the pinions 14 in both directions. The engagement of opposite flanks of the internal teeth 24 of the annular gear 16 by different pinions 14 may effectively reduce back lash in the gear train and may therefore increase a stability of the hybrid transmission system 10. The reduced back lash may be exploited for some applications, e.g. to maintain a certain angular position of the central rotor 12 in a manipulator application of the system 10.

The magnetic field generated by the arrangement of the permanent pinion magnets 20 may also improve a centering of an associated central rotor 12 with a permanent rotor magnet 18.

Fig. 3C and 3D illustrate the simulated magnetic field distribution inside of a circular arrangement of permanent pinion magnets 20 for the case of k=1 in the x-y plane and in a perpendicular y-z plane through the center of the circular arrangement of permanent pinion magnets 20. The x-y plane corresponds to the plane of projection of the previous examples in Figs. 1-3B and coincides with the plane of rotation of the pinions 14/permanent pinion magnets 20 in the previous examples. The magnetic field is indicated by black arrows, wherein the direction and strength of the magnetic field is illustrated by the direction and length of the arrows, respectively.

As can be seen from Fig. 3C, the arrangement of the permanent pinion magnets 20 in a $k=1$ Halbach ring array configuration generates a substantially constant magnetic field close to the center of the array. In the example of Fig. 3C, the magnetic field becomes stronger closer to the permanent pinion magnets 20. However, depending on the geometry of the arrangement of the permanent pinion magnets 20, the magnetic field may also become weaker closer to the permanent pinion magnets 20, e.g. along the vertical or horizontal direction.

Along the z-axis, i.e. the horizontal axis of Fig. 3D, which is perpendicular to the plane of rotation of the permanent pinion magnets 20, the magnetic field strength becomes weaker with increasing distance from the x-y plane, such that a permanent rotor magnet 18 placed close to the center of the arrangement of the permanent pinion magnets 20 is pulled towards the x-y plane and may rest at a saddle point of the magnetic field distribution.

Hence, a bipolar permanent rotor magnet 18 may be centered by the magnetic field of the permanent pinion magnets 20 along the axial z-axis and may rest in the center in a metastable position with respect to the x-y plane, e.g. may be substantially free from magnetic forces in the x-y plane when its orientation is aligned with the magnetic field direction B in the center of the arrangement of permanent pinion magnets 20.

Preferably, the permanent pinion magnets 20 are densely packed to minimize a stray magnetic field outside of the arrangement of permanent pinion magnets 20 and/or to increase a magnetic field strength at the position of the permanent rotor magnet 18.

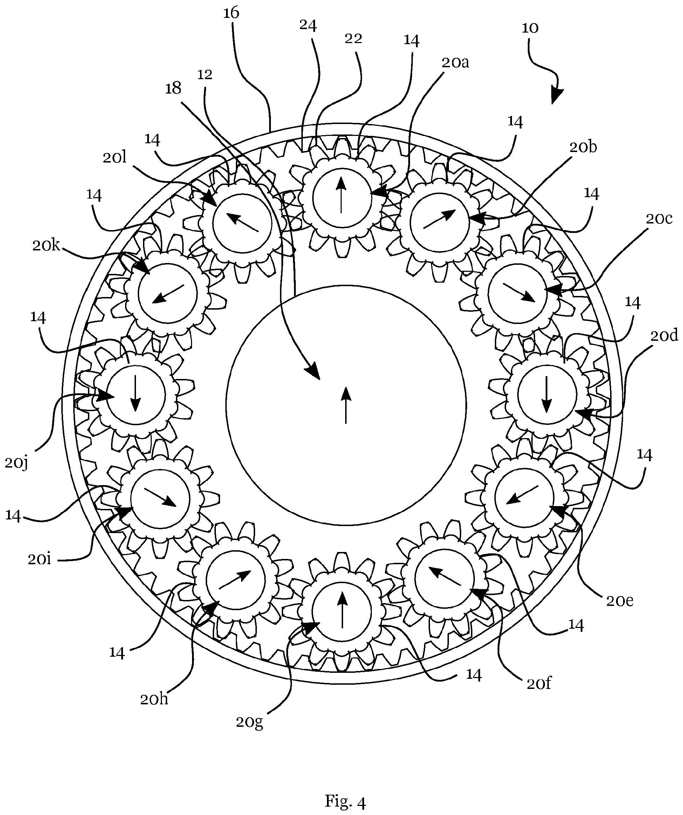

Fig. 4 illustrates a hybrid transmission system 10 according to an example similar to the example of Fig. 1. The hybrid transmission system 10 comprises a central rotor 12, a plurality of twelve pinions 14, and an annular gear 16. The dimensions of the annular gear 16 and the pinions 14 are substantially the same as in Fig. 1, but the increased number of twelve pinions 14 results in a more dense packing of permanent pinion magnets 20, 20a-l.

Specifically, the external teeth 22 of neighboring pinions 14 partially overlap in the plane of projection, such that the external teeth 22 of neighboring pinions 14 may interfere with each other, when the pinions 14 perform concurrent rotations with respect to their respective centers.

In some embodiments, the external teeth 22 of neighboring pinions 14 are therefore offset with respect to each other to prevent interference between the pinions 14 during concurrent rotations. For example, the external teeth 22 of neighboring may be slanted in different directions, or may be offset in the axial direction to prevent interference between the pinions 14 in the system 10.

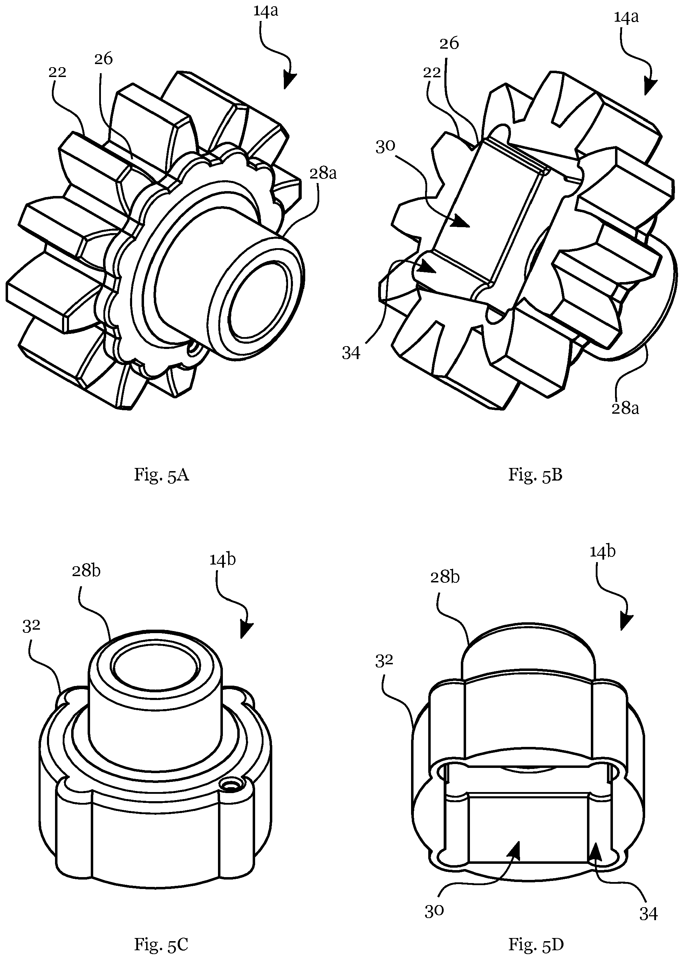

Figs. 5A-D illustrate an example of a pinion 14 composed of two portions 14a, 14b with different maximum radial extensions for avoiding interference between neighboring pinions 14 when the pinions 14 are densely packed in a circular arrangement.

Figs. 5A, 5B illustrate two different schematic perspective views of a first pinion portion 14a according to an example. The first pinion portion 14a comprises a plurality of teeth 22 arranged in a cylindrical gear portion 26 of the first pinion portion 14a and protruding radially away from a rotational axis of the first pinion portion 14a. The first pinion portion 14a further comprises a first protruding portion 28a, protruding axially (i.e. along the rotational axis of the first pinion portion 14a) away from the cylindrical gear portion 26 for mounting the first pinion portion 14a in a bearing (not shown).

On an opposite side of the first protruding portion 28a, the first pinion portion 14a comprises an accommodating cavity 30 for receiving a portion of a permanent pinion magnet 20, 20a-l inside of the cylindrical gear portion 26 in a rotationally fixed manner. For example, the accommodating cavity 30 may substantially have the shape of a polygonal cylinder for receiving a correspondingly shaped permanent pinion magnet 20, 20a-l, e.g. a square magnet, and for mounting the permanent pinion magnet 20, 20a-l in a rotationally fixed manner.

Figs. 5C, 5D illustrate two different schematic perspective views of a complementing second pinion portion 14b according to an example. The second pinion portion 14b comprises a recessed body portion 32 which is free of external teeth 22 and may have a maximum radial extension smaller than the outside diameter of the external teeth 22 of the first pinion portion 14a, and may in particular have a maximum radial extension equal to or smaller than the base circle diameter of the cylindrical gear portion 26 of the first pinion portion 14a. Accordingly, the maximum radial extension of the recessed body portion 32 can be smaller than the maximum radial extension of the cylindrical gear portion 26 with the external teeth 22. The axial extension of the recessed body portion 32 may be equal to or different from the axial extension of the teeth 22 on the cylindrical gear portion 26. For example, the recessed body portion 32 of the second pinion portion 14b may correspond to the cylindrical gear portion 26 of the first pinion portion 14a from which the external teeth 22 have been removed.

The second pinion portion 14b may also comprise a second protruding portion 28b, protruding axially (i.e. along the rotational axis of the second pinion portion 14b) away from the recessed body portion 32 for mounting the second pinion portion 14b in a bearing (not shown).

In addition, the second pinion portion 14b may comprise an accommodating cavity 30 similar to the accommodating cavity 30 of the first pinion portion 14a for receiving an opposite portion of the permanent pinion magnet 20, 20a-l inside of the recessed body portion 32 in a rotationally fixed manner. The accommodating cavity 30 may be arranged on an opposite side with respect to the second protruding portion 28b on the second pinion portion 14b. The accommodating cavity 30 of the second pinion portion 14b may have a cross-section mirroring the cross section of the accommodating cavity 30 of the first pinion portion 14a, such as to enable receiving opposite sides of the permanent pinion magnet 20, 20a-l in the accommodating cavities 30 in the recessed body portion 32 and the cylindrical gear portion 26.

The pinion 14 may be assembled by joining the first pinion portion 14a and the second pinion portion 14b at the recessed body portion 32 and the cylindrical gear portion 26 while enclosing the permanent pinion magnet 20, 20a-l in the first pinion portion 14a and the second pinion portion 14b. The first pinion portion 14a and the second pinion portion 14b may be fixedly joined to each other via an adhesive or via fasteners, such as screws or bolts, which may be threaded through common cylindrical openings 34, e.g. at the edges of the accommodating cavities 30 as shown in Figs. 5A-5D.

A complementing pinion 14 may be provided to complement the pinion 14 assembled in this manner, which may comprise a first pinion portion 14a with a the recessed body portion 32 and a second pinion portion 14b with a cylindrical gear portion 26, such that the external teeth 22 of the complementing pinions 14 may overlap along the axial direction without interfering with each other, when the complementing pinions 14 are mounted next to each other via the protruding portions 28a, 28b. The recessed body portions 32 of one pinion 14 may then be aligned along the axial direction with the external teeth 22 of the complementing pinions 14 and vice versa, such that the external teeth 22 of the complementing pinions 14 may be offset with respect to each other in the axial direction.

The skilled person will appreciate that the permanent pinion magnets 20, 20a-l may also be held entirely or mostly in either one of the first pinion portion 14a and the second pinion portion 14b. Further, the skilled person will appreciate that the cross-sections of the accommodating cavities 30 of the first pinion portion 14a and the second pinion portion 14b may also be different and need not be cylindrical. In addition, neighboring pinions 14 may solely complement each other while having different geometries, and may e.g. feature external teeth 22 and/or recessed body portions 32 with different axial or maximum radial extension. Moreover, while the first pinion portion 14a and the second pinion portion 14b have been shown with a cylindrical gear portion 26 and a recessed body portion 32, respectively, in some embodiments, the first pinion portion 14a and/or the second pinion portion 14b may feature both a cylindrical gear portion 26 and a recessed body portion 32 to form a complementing pinion 14, when the pinion portions 14a, 14b are joined. Further, any means of joining the first pinion portion 14a and the second pinion portion 14b may generally be employed in some embodiments.

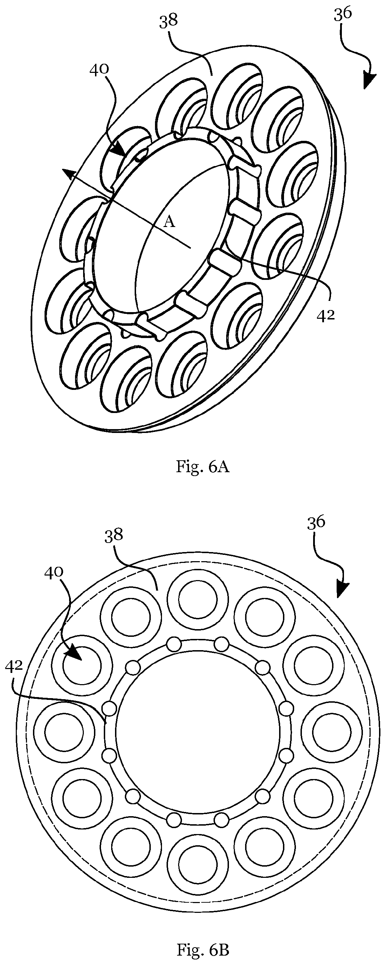

Figs. 6A, 6B show schematic perspective and top views of a carrier portion 36 for mounting a plurality of pinions 14 according to an example. The carrier portion 36 comprises a disc shaped carrier body 38 with a plurality of accommodating recesses 40 for mounting the protruding portions 28a, 28b of the pinions 14. The accommodating recesses 40 are regularly distributed around the carrier body 38 to mount/take up the pinions 14 in a circular arrangement.

The carrier portion 36 may be combined with a mirrored or complementing carrier portion 36 to form a carrier for mounting the protruding portions 28a, 28b of the pinions 14 on opposite sides of the pinions 14 in a fixed relative arrangement, e.g. via bearings held in the accommodating recesses 40 of the complementing carrier portions 36, while the pinions 14 may be free to spin around respective individual rotation axes along the axial direction A.

The carrier portion 36 further comprises a cylindrical web 42 protruding away from the disc shaped carrier body 38 along the axial direction A and delimiting a central through-going passage for receiving a central rotor 12 (not shown). The cylindrical web 42 may define a casing of the central rotor 12 and may prevent mechanical interference between the pinions 14 and the central rotor 12. For example, the cylindrical web 42 may form a fluid-tight seal when complementing carrier portions 36 are joined to each other, such as to separate fluidic environments of the pinions 14 and the central rotor 12, e.g. to hold the pinions 14 in a lubricating liquid while the central rotor 12 may be immersed in a different fluidic environment.

The outside diameter of the disc shaped carrier body 38 may be open, such as to enable external mechanical coupling to the pinions 14 through an annular gear 16.

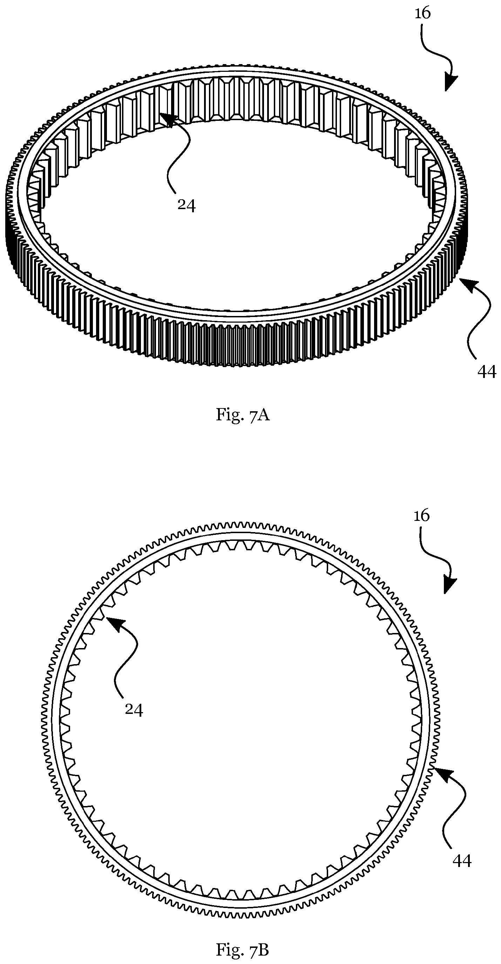

Figs. 7A, 7B show perspective and top views of a circular annular gear 16 according to an example. The annular gear 16 comprises internal teeth 24 for coupling to the external teeth 22 of the pinions 14 (not shown) arranged inside of the annular gear 16, and may further comprise external teeth 44 for coupling to external teeth of an external gear train (not shown), such as to couple a mechanical torque to the annular gear 16. As shown in Figs. 7A, 7B the number of external teeth 44 and internal teeth 24 of the annular gear 16 may be different depending on the application.

The annular gear 16 may be held between radially outwards edges of a pinion carrier, such as a carrier formed by complementing carrier portions 36 similar to the example shown in Figs. 6A, 6B. For example, the internal teeth 24 of the annular gear 16 may be engaged with the external teeth 22 of the pinions 14 before joining the complementing carrier portions 36, such that the annular gear 16 may maintain a relative angular arrangement of the permanent pinion magnets 20, 20a-l of the pinions 14 while the hybrid transmission system 10 is assembled from its components.

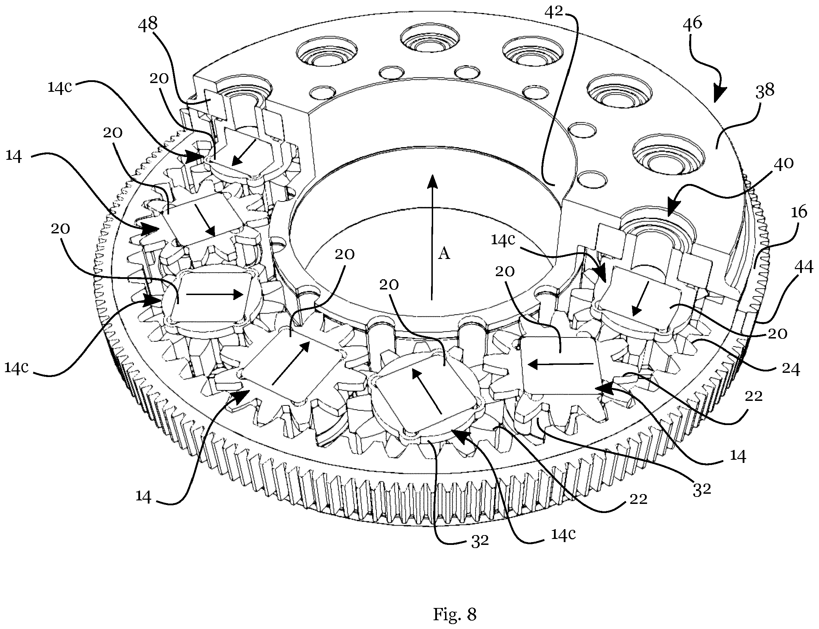

Fig. 8 shows a perspective sectional view of a hybrid transmission system 10 comprising an annular gear 16 and twelve complementing pinions 14, 14c in an arrangement similar to the example shown in Fig. 4.

The pinion 14 and its complementing pinions 14c are arranged alternately in a circular arrangement and are mounted in a common carrier 46 next to each other, such that the external teeth 22 of the pinions 14, 14c overlap when viewed along the axial direction A. The pinion 14 and its complementing pinions 14c have an inverse arrangement of a recessed body portion 32 and a cylindrical gear portion 26 along the axial direction, such that the recessed body portion 32 of one pinion 14 may be aligned with the external teeth 22 of the neighboring complementing pinions 14c along the axial direction and vice versa.

Each of the pinions 14, 14c is arranged in an accommodating recess 40 of the carrier 46 and is mounted via a bearing 48, in particular a non-magnetic bearing, e.g. a stainless steel or ceramic ball bearing between opposite carrier bodies 38 (only top carrier body visible) of the carrier 46. The carrier bodies 38 of the carrier 46 restrict axial movement of the pinions 14, 14c and the annular gear 16, and are connected through respective cylindrical webs 42 at the inside perimeter of the carrier 46. The cylindrical webs 42 define a through-going passage through the carrier 46 to receive a central rotor 12 (not shown) in the center of the carrier 46.

The pinions 14, 14c are mounted in the carrier 46 via bearings 48 on opposite sides (only top side visible), such that the pinions 14, 14c are free to spin in a rotational plane perpendicular to the axial direction A. However, the relative orientations of the pinions 14, 14c may be maintained by the engagement of the external teeth 22 of the respective pinion 14, 14c with the internal teeth 24 of the annular gear 16.

The annular gear 16 comprises external teeth 44 which may be accessible at a radially outward side of the carrier 46, such as to hold the annular gear 16 in a fixed angular position and/or to drive a rotation of the angular gear 16 in a rotational plane perpendicular to the axial direction A. The rotation of the angular gear 16 may be transmitted to the pinions 14, 14c through the engagement of the external teeth 22 of the pinions 14, 14c and the internal teeth 24 of the annular gear 16, such as to drive a concurrent rotation of the pinions 14, 14c.

Each of the pinions 14, 14c comprises a square permanent pinion magnet 20, 20a-l arranged concentrically inside of the pinion 14, 14c. The magnetic orientations (indicated by black arrows on the magnets) of neighboring permanent pinion magnets 20, 20a-l may differ by 60° as illustrated in Fig. 8, such that the twelve permanent pinion magnets 20, 20a-l in the pinions 14, 14c constitute a $k$=1 Halbach ring array. Accordingly, a substantially constant magnetic field may be generated by the permanent pinion magnets 20, 20a-l in the through-going passage defined by the cylindrical webs 42 of the carrier 46, such as to magnetically couple to a permanent rotor magnet 18 of the central rotor 12 arranged inside of the through-going passage (not shown).

A mechanical torque of an external drive may then be mechanically coupled to the carrier 46 and/or the annular gear 16 to be magnetically transmitted to the central rotor 12 in the through-going passage while the central rotor 12 may be not mechanically coupled to the drive. The torque may be transmitted at a speed ratio, which may be based on the ratio of the number of external teeth 22 on the pinions 14, 14c to the number of internal teeth 24 on the annular gear 16, with a compact hybrid transmission system 10.

The mechanical torque may be coupled to the hybrid transmission system 10 via the external teeth 44 of the annular gear 16. However, in some embodiments, the annular gear 16 may also be held fixed and the torque may be coupled to the carrier 46, such as to drive a relative motion of the carrier 46 with respect to the annular gear 16. The relative motion of the carrier 46 and the annular gear 16 may then drive a rotation of the pinions 14, 14c at a different angular velocity than the angular velocity of the carrier 46 for magnetically driving a rotation of the central rotor 12 with the permanent pinion magnets 20, 20a-l.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | hybrid transmission system |
| 12 | central rotor |
| 14, 14c | pinion, complementing pinion |
| 16 | annular gear |
| 18 | permanent rotor magnet |
| 20, 20a-l | permanent pinion magnet |
| 22 | external teeth |
| 24 | internal teeth |
| 26 | cylindrical gear portion |
| 28a, 28b | protruding portion |
| 30 | accommodating cavity |
| 32 | recessed body portion |
| 34 | cylindrical opening |
| 36 | carrier portion |

| 38 | carrier body |
| --- | --- |
| 40 | accommodating recesses |
| 42 | cylindrical web |
| 44 | external teeth of the annular gear |
| 46 | carrier |
| 48 | bearing |

**Claims**

1. A hybrid transmission system (10) comprising:

   a central rotor (12) comprising a permanent rotor magnet (18) which is rotationally fixed with respect to the central rotor (12);
   a plurality of pinions (14) arranged around the central rotor (12); and
   an annular gear (16) mechanically engaging the plurality of pinions (14), such that rotating the annular gear (16) drives a concurrent rotation of the plurality of pinions (14),
   wherein each of the plurality of pinions (14) comprises a respective permanent pinion magnet (20, 20a-l), wherein the permanent pinion magnet (20, 20a-l) is mounted to the respective pinion (14) in a rotationally fixed manner, such that driving a concurrent rotation of the plurality of pinions (14) induces cyclically varying magnetic forces on the central rotor (12) to magnetically drive a rotation of the central rotor (12).

2. The hybrid transmission system (10) of claim 1, wherein the central rotor (12) comprises a central shaft rotating around a shaft axis, wherein the central shaft is arranged concentrically with respect to the plurality of pinions (14) and the annular gear (16).

3. The hybrid transmission system (10) of any one of the preceding claims, wherein the annular gear (16) is arranged radially outwards from the plurality of pinions (14) with respect to the central rotor (12) and comprises teeth (24) protruding radially inwards from an inner perimeter of the annular gear (16) to engage with corresponding teeth (22) of each of the plurality of pinions (14).

4. The hybrid transmission system (10) of any one of the preceding claims, wherein the pinions (14) of the plurality of pinions (14) are mounted to a carrier (46), wherein the annular gear (16) and the carrier (46) are rotatable with respect to each other to rotate each of the plurality of pinions (14) and to drive a motion of the central rotor (12).

5. The hybrid transmission system (10) of any one of the preceding claims, wherein the annular gear (16) comprises outer teeth (44) at an outer circumference of the annular gear (16) to receive an external torque.

6. The hybrid transmission system (10) of any one of the preceding claims, wherein the pinions (14) of the plurality of pinions (14) are arranged in a casing (42), wherein the casing (42) surrounds the central rotor (12) and mechanically isolates the central rotor (12) and the plurality of pinions (14).

7. The hybrid transmission system (10) of any one of the preceding claims, wherein the central rotor (12) is not coupled in a mechanically force-locking manner to the plurality of pinions (14).

8. The hybrid transmission system (10) of any one of the preceding claims, wherein a magnetic orientation of each of the permanent pinion magnets (20, 20a-l) lies in a plane perpendicular to the axis of rotation of the central rotor (12).

9. The hybrid transmission system (10) of any one of the preceding claims, wherein each pinion (14) of the plurality of pinions (14) is mounted via two non-magnetic bearings (48) arranged on axially opposite faces of each pinion (14) to a carrier (46).

10. The hybrid transmission system (10) of any one of the preceding claims, wherein teeth (22) of neighboring pinions (14) of the plurality of pinions (14) are slanted and/or offset with respect to each other in an axial direction (A), and are sufficiently close such that axial projections of teeth (22) of neighboring pinions (14) overlap without engaging each other.

11. The hybrid transmission system (10) of any one of the preceding claims, wherein the pinions (14) of the plurality of pinions (14) comprise an equal number of teeth (22).

12. The hybrid transmission system (10) of any one of the preceding claims, wherein the permanent pinion magnets (20, 20a-l) of the plurality of pinions (14) are bipolar magnets, which are preferably mounted concentrically with respect to the corresponding pinion (14).

13. The hybrid transmission system (10) of any one of the preceding claims, wherein the magnetic orientations of the permanent pinion magnets (20, 20a-l) of the plurality of pinions (14) are arranged in a fixed relative angular relationship, wherein the magnetic orientations of each pair of neighboring permanent pinion magnets (20, 20a-l) preferably differs by a same angular shift.

14. The hybrid transmission system (10) of any one of the preceding claims, wherein the magnetic orientation of the permanent pinion magnets (20, 20a-l) of neighboring pinions (14) differ by an angle of $\Delta\varphi = (k + 1) * 360°/N$, with $N$ being the total number of pinions (14) magnetically driving the central rotor (12) and k being a positive integer;

   wherein the permanent rotor magnet (18) preferably comprises $2k$ magnetic poles; and/or
   wherein $k$=1 and the permanent rotor magnet (18) is preferably a bipolar magnet.

15. The hybrid transmission system (10) of any one of the preceding claims, wherein the plurality of pinions (14) comprises more than 4 pinions (14), in particular at least 8 or at least 12 pinions (14).


**Patentansprüche**

1. Hybridgetriebesystem (10), umfassend:

   einen mittigen Rotor (12), der einen Permanentrotormagneten (18) umfasst, der in Bezug auf den mittigen Rotor (12) drehfest ist;
   eine Mehrzahl von Ritzeln (14), die um den mittigen Rotor (12) herum angeordnet sind; und
   einen Zahnring (16), welcher mechanisch mit der Mehrzahl von Ritzeln (14) eingreift, so dass ein Drehen des Zahnrings (16) eine gleichzeitige Drehung der Mehrzahl von Ritzeln (14) antreibt,
   wobei jedes der Mehrzahl von Ritzeln (14) einen jeweiligen Permanentritzelmagneten (20, 20a-l) umfasst, wobei der Permanentritzelmagnet (20, 20a-l) an dem jeweiligen Ritzel (14) drehfest angebracht ist, so dass ein Antreiben einer gleichzeitigen Drehung der Mehrzahl von Ritzeln (14) zyklisch variierende Magnetkräfte auf den mittigen Rotor (12) induziert, um eine Drehung des mittigen Rotors (12) magnetisch anzutreiben.

2. Hybridgetriebesystem (10) nach Anspruch 1, wobei der mittige Rotor (12) eine mittige Welle umfasst, die sich um eine Wellenachse dreht, wobei die mittige Welle in Bezug auf die Mehrzahl von Ritzeln (14) und den Zahnring (16) konzentrisch angeordnet ist.

3. Hybridgetriebesystem (10) nach einem der vorhergehenden Ansprüche, wobei der Zahnring (16) in Bezug auf den mittigen Rotor (12) von der Mehrzahl von Ritzeln (14) radial nach außen angeordnet ist und Zähne (24) umfasst, die von einem Innenumfang des Zahnrings (16) radial nach innen vorstehen, um mit entsprechenden Zähnen (22) jedes der Mehrzahl von Ritzeln (14) einzugreifen.

4. Hybridgetriebesystem (10) nach einem der vorhergehenden Ansprüche, wobei die Ritzel (14) der Mehrzahl von Ritzeln (14) an einem Träger (46) befestigt sind, wobei der Zahnring (16) und der Träger (46) in Bezug zueinander drehbar sind, um jedes der Mehrzahl von Ritzeln (14) zu drehen und eine Bewegung des mittigen Rotors (12) anzutreiben.

5. Hybridgetriebesystem (10) nach einem der vorhergehenden Ansprüche, wobei der Zahnring (16) äußere Zähne (44) an einem Außenumfang des Zahnrings (16) umfasst, um ein externes Drehmoment aufzunehmen.

**6.** Hybridgetriebesystem (10) nach einem der vorhergehenden Ansprüche, wobei die Ritzel (14) der Mehrzahl von Ritzeln (14) in einem Gehäuse (42) angeordnet sind, wobei das Gehäuse (42) den mittigen Rotor (12) umgibt und den mittigen Rotor (12) und die Mehrzahl von Ritzeln (14) mechanisch isoliert.

**7.** Hybridgetriebesystem (10) nach einem der vorhergehenden Ansprüche, wobei der mittige Rotor (12) nicht mechanisch kraftschlüssig mit der Mehrzahl von Ritzeln (14) gekoppelt ist.

**8.** Hybridgetriebesystem (10) nach einem der vorhergehenden Ansprüche, wobei eine magnetische Ausrichtung jedes der Permanentritzelmagneten (20, 20a-l) in einer Ebene senkrecht zur Drehachse des mittigen Rotors (12) liegt.

**9.** Hybridgetriebesystem (10) nach einem der vorhergehenden Ansprüche, wobei jedes Ritzel (14) der Mehrzahl von Ritzeln (14) über zwei nichtmagnetische Lager (48), die an axial gegenüberliegenden Flächen jedes Ritzels (14) angeordnet sind, an einem Träger (46) befestigt ist.

**10.** Hybridgetriebesystem (10) nach einem der vorhergehenden Ansprüche, wobei Zähne (22) benachbarter Ritzel (14) der Mehrzahl von Ritzeln (14) in Bezug aufeinander in einer axialen Richtung (A) geneigt und/oder versetzt sind und ausreichend nahe sind, so dass axiale Projektionen von Zähnen (22) benachbarter Ritzel (14) einander überlappen, ohne miteinander in Eingriff zu kommen.

**11.** Hybridgetriebesystem (10) nach einem der vorhergehenden Ansprüche, wobei die Ritzel (14) der Mehrzahl von Ritzeln (14) eine gleiche Anzahl von Zähnen (22) umfassen.

**12.** Hybridgetriebesystem (10) nach einem der vorhergehenden Ansprüche, wobei die Permanentritzelmagneten (20, 20a-l) der Mehrzahl von Ritzeln (14) Bipolarmagneten sind, die vorzugsweise in Bezug auf das entsprechende Ritzel (14) konzentrisch befestigt sind.

**13.** Hybridgetriebesystem (10) nach einem der vorhergehenden Ansprüche, wobei die magnetischen Ausrichtungen der Permanentritzelmagneten (20, 20a-l) der Mehrzahl von Ritzeln (14) in einer festen relativen Winkelbeziehung angeordnet sind, wobei sich die magnetischen Ausrichtungen jedes Paars von benachbarten Permanentritzelmagneten (20, 20a-l) vorzugsweise um eine gleiche Winkelverschiebung unterscheiden.

**14.** Hybridgetriebesystem (10) nach einem der vorhergehenden Ansprüche, wobei sich die magnetische Ausrichtung der Permanentritzelmagneten (20, 20a-l) von benachbarten Ritzeln (14) um einen Winkel von $\Delta\varphi = (k + 1) * 360°/N$ unterscheidet, wobei N die Gesamtzahl von Ritzeln ist, (14), welche den mittigen Rotor (12) magnetisch antreiben, und k eine positive ganze Zahl ist;

> wobei der Permanentrotormagnet (18) vorzugsweise $2k$ Magnetpole umfasst; und/oder
> wobei k = 1 und der Permanentrotormagnet (18) vorzugsweise ein Bipolarmagnet ist.

**15.** Hybridgetriebesystem (10) nach einem der vorhergehenden Ansprüche, wobei die Mehrzahl von Ritzeln (14) mehr als 4 Ritzel (14), insbesondere mindestens 8 oder mindestens 12 Ritzel (14) umfasst.

**Revendications**

**1.** Système de transmission hybride (10) comprenant :

> un rotor central (12) comprenant un aimant de rotor permanent (18) qui est fixe en rotation par rapport au rotor central (12) ;
> une pluralité de pignons (14) agencés autour du rotor central (12) ; et
> un engrenage annulaire (16) se mettant en prise mécaniquement avec la pluralité de pignons (14), de telle sorte qu'une rotation de l'engrenage annulaire (16) entraîne une rotation simultanée de la pluralité de pignons (14),
> dans lequel chacun de la pluralité de pignons (14) comprend un aimant de pignon permanent (20, 20a-l) respectif,
> dans lequel l'aimant de pignon permanent (20, 20a-l) est monté sur le pignon (14) respectif d'une manière fixe en rotation, de telle sorte qu'un entraînement d'une rotation simultanée de la pluralité de pignons (14) induit des forces magnétiques cycliquement variables sur le rotor central (12) pour entraîner magnétiquement une rotation du rotor central (12).

**2.** Système de transmission hybride (10) selon la revendication 1, dans lequel le rotor central (12) comprend un arbre central tournant autour d'un axe d'arbre, dans lequel l'arbre central est agencé concentriquement par rapport à la pluralité de pignons (14) et à l'engrenage annulaire (16).

**3.** Système de transmission hybride (10) selon l'une quelconque des revendications précédentes, dans lequel l'engrenage annulaire (16) est agencé radialement vers l'extérieur depuis la pluralité de pignons (14) par rapport au rotor central (12) et comprend des dents (24) faisant saillie radialement vers l'intérieur depuis un périmètre interne de l'engrenage annulaire (16) pour se mettre en prise avec des dents (22) correspondantes de chacun de la pluralité de pignons (14).

**4.** Système de transmission hybride (10) selon l'une quelconque des revendications précédentes, dans lequel les pignons (14) de la pluralité de pignons (14) sont montés sur un support (46), dans lequel l'engrenage annulaire (16) et le support (46) sont rotatifs l'un par rapport à l'autre pour faire tourner chacun de la pluralité de pignons (14) et pour entraîner un mouvement du rotor central (12).

**5.** Système de transmission hybride (10) selon l'une quelconque des revendications précédentes, dans lequel l'engrenage annulaire (16) comprend des dents externes (44) au niveau d'une circonférence externe de l'engrenage annulaire (16) pour recevoir un couple externe.

**6.** Système de transmission hybride (10) selon l'une quelconque des revendications précédentes, dans lequel les pignons (14) de la pluralité de pignons (14) sont agencés dans un carter (42), dans lequel le carter (42) entoure le rotor central (12) et isole mécaniquement le rotor central (12) et la pluralité de pignons (14).

**7.** Système de transmission hybride (10) selon l'une quelconque des revendications précédentes, dans lequel le rotor central (12) n'est pas couplé par verrouillage de force mécanique à la pluralité de pignons (14).

**8.** Système de transmission hybride (10) selon l'une quelconque des revendications précédentes, dans lequel une orientation magnétique de chacun des aimants de pignon permanents (20-20a-l) se situe dans un plan perpendiculaire à l'axe de rotation du rotor central (12).

**9.** Système de transmission hybride (10) selon l'une quelconque des revendications précédentes, dans lequel chaque pignon (14) de la pluralité de pignons (14) est monté via deux paliers non magnétiques (48) agencés sur des faces axialement opposées de chaque pignon (14) sur un support (46).

**10.** Système de transmission hybride (10) selon l'une quelconque des revendications précédentes, dans lequel les dents (22) de pignons (14) voisins de la pluralité de pignons (14) sont inclinées et/ou décalées l'une par rapport à l'autre dans une direction axiale (A), et sont suffisamment proches de telle sorte que des saillies axiales des dents (22) de pignons (14) voisins se chevauchent sans se mettre en prise l'une avec l'autre.

**11.** Système de transmission hybride (10) selon l'une quelconque des revendications précédentes, dans lequel les pignons (14) de la pluralité de pignons (14) comprennent un même nombre de dents (22).

**12.** Système de transmission hybride (10) selon l'une quelconque des revendications précédentes, dans lequel les aimants de pignon permanents (20, 20a-l) de la pluralité de pignons (14) sont des aimants bipolaires, qui sont de préférence montés concentriquement par rapport au pignon (14) correspondant.

**13.** Système de transmission hybride (10) selon l'une quelconque des revendications précédentes, dans lequel les orientations magnétiques des aimants de pignon (20-20a-l) permanents de la pluralité de pignons (14) sont agencées dans une relation angulaire relative fixe, dans lequel les orientations magnétiques de chaque paire d'aimants de pignon permanents voisins (20, 20a-l) diffèrent de préférence d'un même décalage angulaire.

**14.** Système de transmission hybride (10) selon l'une quelconque des revendications précédentes, dans lequel l'orientation magnétique des aimants de pignon permanents (20, 20a-l) de pignons (14) voisins diffère d'un angle de $\Delta\varphi = (k + 1) * 360°/N$, $N$ étant le nombre total de pignons (14) entraînant magnétiquement le rotor central (12) et k étant un nombre entier positif ;

dans lequel l'aimant de rotor permanent (18) comprend de préférence 2k pôles magnétiques ; et/ou
dans lequel $k = 1$ et l'aimant de rotor permanent (18) est de préférence un aimant bipolaire.

**15.** Système de transmission hybride (10) selon l'une quelconque des revendications précédentes, dans lequel la pluralité de pignons (14) comprend plus de 4 pignons (14), en particulier au moins 8 ou au moins 12 pignons (14).

Fig. 1

k=0
Δφ=30°

Fig. 2A

k=1
Δφ=60°

Fig. 2B

k=2
Δφ=90°

Fig. 2C

k=1 Δφ=60°

Fig. 2D

k=1 Δφ=60°

Fig. 2E

Fig. 3A

Fig. 3B

Fig. 3C

Fig. 3D

Fig. 4

Fig. 5A

Fig. 5B

Fig. 5C

Fig. 5D

Fig. 6A

Fig. 6B

Fig. 7A

Fig. 7B

Fig. 8

EP 4 007 137 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100176674 A1